# EUROPÄISCHE PATENTSCHRIFT

(11) **EP 0 595 137 B1**
(45) Veröffentlichungstag und Bekanntmachung des Hinweises auf die Patenterteilung: **18.06.1997**
(21) Anmeldenummer: 93116738.1
(22) Anmeldetag: 16.10.1993
(51) Int. Cl.: C08K 5/3492, C08L 59/00

(54) **Polyoxymethylen mit verbesserter Stabilität gegen Säuren, Verfahren zu seiner Herstellung sowie Verwendung**
Polyoxymethylene with increased acid stability process of preparing the same and its use
Polyoxyméthylène à stabilité acide améliorée, procédé pour le préparer ainsi que son utilisation

(30) Priorität: 24.10.1992 DE 9214402 U; 29.10.1992 DE 4236465
(43) Veröffentlichungstag der Anmeldung: 04.05.1994
(73) Patentinhaber: Degussa Aktiengesellschaft, 60311 Frankfurt (DE)
(72) Erfinder: Schauhoff, Stephanie, Dr., D-60385 Frankfurt am Main (DE); Arnoldi, Detlef, Dr., D-67273 Weisenheim am Berg (DE); Nun, Edwin, Dr., D-63636 Brachttal (DE)

(56) Entgegenhaltungen:
- EP-A- 0 480 314
- EP-A- 0 487 974
- DE-A- 4 042 276
- CHEMICAL ABSTRACTS, vol. 92, no. 2, 14. Januar 1980, Columbus, Ohio, US; abstract no. 7404, Seite 34 ;

## Beschreibung

Die Erfindung betrifft Polyoxymethylen mit verbessertem Säureschutz sowie kleinerer Sphärolithstruktur, Formkörper hieraus, ein Verfahren zur Herstellung von Polyoxymethylen mit verbessertem Säureschutz sowie die Verwendung von Polyoxymethylen in Kontakt mit sauren Medien und in Formkörpern mit feinerer Sphärolithstruktur.

Polyoxymethylen (Polyacetal) ist ein ausgezeichneter Werkstoff, aus dem sich insbesondere durch Spritzguß die unterschiedlichsten Gebrauchsgegenstände herstellen lassen. Von Vorteil ist dabei insbesondere die chemische Resistenz gegen viele organische Lösungsmittel sowie Basen. Seit der Markteinführung der Polyacetale werden Versuche durchgeführt, die aus der chemischen Struktur resultierende Säurelabilität zu vermindern. Die wiederkehrende Acetalstruktur in der Polymerkette weist, wenn keine Schutzmaßnahmen durchgeführt werden, instabile Halbacetal-Endgruppen auf, an denen der Abbau des Polymers erfolgt. Zur Stabilisierung des Polymers können, wie in H. Cherdron, L. Höhr, W. Kern, Makromol. Chem., 52, 48ff (1962) beschrieben, die Endgruppen des Polymers durch Veresterung oder Veretherung geschützt werden.

Ein anderer Weg ist der Einbau von Comonomeren, die bei einem Abbau der Polymerkette eine stabile Endgruppe bilden. Hierdurch wird Polyoxymethylen (POM) alltagstauglich, die Labilität gegenüber Säuren bleibt jedoch bestehen, da (vgl. V. V. Pchelintsev, A. Yu. Sokolov, G. E. Zaikov, Polym. Degradation and Stability, 21(4), 285 (1988)) die säurekatalysierte hydrolytische Zersetzung von POM auch an beliebiger Stelle des Polymers erfolgen kann und somit stabilisierte Endgruppen oder Comonomereinheiten keinen ausreichenden Schutz gewährleisten. Aus der DE-PS 11 93 240 ist bekannt, daß insbesondere hohe Anteile eines Urethans den bei der Acidolyse entstehenden Formaldehyd abfangen. Ein Beispiel hierfür ist ein Formkörper mit 40 % POM. Hierdurch wird ggf. eine Geruchsbelästigung oder Gesundheitsgefährdung durch freigesetzten Formaldehyd vermindert, der Abbau des POMs bleibt jedoch bestehen. Außerdem hat ein Produkt mit 40 % POM / 60 % TPU keine POM-Matrix mehr, so daß die vorteilhaften Eigenschaften des POMs (z. B. Steifigkeit) verloren gehen. In der DE-PS 12 35 585 wird die Acylierung von POM mittels Carbodiimid beschrieben. Der acidolytische Abbau der Polymerisate durch freie Essigsäure wird dabei beträchtlich herabgesetzt. Das Carbodiimid soll insbesondere gegen die kurzzeitigen sauren Bedingungen bei der Veresterung stabilisieren. Untersuchungen haben jedoch gezeigt, daß die so hergestellten Produkte ebenfalls für saure Einsatzbedingungen ungeeignet sind.

Ferner ist z. B. aus der DE-PS 25 40 207 bekannt, dem POM zum Schutz gegen während der Herstellung und Verarbeitung auftretende saure Bedingungen basische Substanzen, wie z. 8. Salze, zuzusetzen. Die basischen Substanzen dienen der Neutralisation saurer Komponenten im Polymer, geeignet sind daher nur Salze, deren Säureanteil nicht selbst das POM angreift. So kann z. 8. einem Polyoxymethylen eine geringe Menge an Natriumcarbonat zugegeben werden. Die so erhaltenen Produkte sind ebenfalls für saure Einsatzbedingungen nicht geeignet.

Aufgabe der vorliegenden Erfindung ist ein Polyoxymethylen bzw. ein Herstellungsverfahren für ein Polyoxymethylen, das gegenüber Säuren stabilisiert ist und aus dem sich feine oder filigrane Formkörper spritzgießen lassen. Das Polyoxymethylen soll möglichst weitgehend seine ursprünglichen physikalischen Eigenschaften, wie z. B. Steifigkeit, Zähigkeit, Farbe, beibehalten.

Gelöst wird diese Aufgabe hinsichtlich des Polyoxymethylens mit einer Zusammensetzung gemäß Anspruch 1.

Erfindungsgemäß wurde festgestellt, daß Melamincyanurat (MCA) schon in geringen Mengen geeignet ist, die Säurelabilität von POM zu verringern. Melamincyanurat kann dabei auch mit weiteren Stoffen, die ebenfalls geeignet sind die Säureempfindlichkeit herabzusetzen sowie mit üblichen weiteren mit POM vermischbaren Komponenten kombiniert werden. Andererseits hat sich gezeigt, daß einige Stoffe, die in POM bislang als Säurefänger eingesetzt wurden, die Säurebeständigkeit des fertigen Produktes teils sogar nachteilhaft beeinflussen und zu erheblichen Verfärbungen führen können. So sind z. B. Carbodiimide und auch Natriumcarbonat für die Zwecke der vorliegenden Erfindung ungeeignet.

Geeignete Cokomponenten zur Verminderung der Säureempfindlichkeit können z. B. Salze von mehrwertigen Carbonsäuren, TPU und Polyalkoxyglycole sein.

Die Stabilisierung des POM wird erfindungsgemäß wie folgt bestimmt:

Rohes Polyoxymethylen wird auf einer ZSK 28 (Zwei-Schnecken-Coextruder) unter üblichen Bedingungen mit Zuschlagstoffen extrudiert. Die aus dem Extruder austretenden Stränge werden zur Kühlung durch kaltes Wasser geleitet und anschließend granuliert. Aus den getrockneten Granulaten werden bei 190°C Preßplatten der Größe 15,8 cm x 15,8 cm x 0,2 cm gepreßt, aus denen Probekörper der Dimensionen 7,8 cm x 1,0 cm x 0,2 cm gesägt werden. Die Probekörper werden am oberen Ende durchbohrt, entgratet, exakt nachvermessen und gewogen.

### Test:

Jeweils fünf Probekörper einer Platte werden 5 cm tief in 2 gew.-%ige Phosphorsäure eingetaucht, langsam herausgezogen, die anhaftende Säure läßt man abtropfen. Die letzten, am unteren Ende der Probekörper anhaftenden Säuretropfen werden durch Auftupfen auf Zellstoff entfernt. Die Probekörper werden vorsichtig auf einen Draht aufgezogen und untereinander berührungsfrei bei einer relativen Luftfeuchtigkeit zwischen 20 und 30 % 24 h lang aufgehängt. Die Luftfeuchtigkeit wird durch Kieselgel eingestellt, daß täglich gewechselt wird, wodurch sich eine Luftfeuchtigkeit von ca. 20 % einstellt, die innerhalb von 24 h bis max. 30 % ansteigt. Die am Probekörper verbleibenden Säurespuren verursachen eine Korrosion (Krater im Probekörper) deren Ausmaß durch Wiegen bestimmt wird. Danach werden die Probekörper erneut der Phosphorsäure ausgesetzt. Diese Prozedur wird so oft wiederholt, bis die Probekörper - zumindest ein Probekörper aus nichtstabilisiertem POM - deutliche Schädigungen aufweist (Verlust ≥ 5 mg/cm²). Zu große Schädigungen sollen vermieden werden, da hierdurch die Geometrie des Probekörpers derart verändert wird, daß die Bestimmung des Verlustes in mg/cm² erschwert wird. Die Zeit von 24 h wurde gewählt, da nach dieser Zeit bei den angegebenen Bedingungen (Raumtemperatur) keine weitere Schädigung mehr auftritt. Dies bedeutet, daß der Probekörper ggf. auch länger unter den angegebenen Bedingungen verbleiben kann, bevor er wieder in die Phosphorsäure getaucht wird. Dies erlaubt es auch, daß die Probekörper z. B. an Wochenenden nicht behandelt werden müssen. Im vorliegenden Fall wurden am 5. und 6. Tag die Probekörper nicht in die Phosphorsäure getaucht.

Im Test wird der durchschnittliche Masseverlust in % (mg/cm² getauchte Oberfläche) bezüglich des durchschnittlichen Masseverlustes des Standardpolyoxymethylens bestimmt.

Die erfindungsgemäß erhaltenen Polyoxymethylen-Mischungen mit verbesserter Säurebeständigkeit sind besonders geeignet für Einsatzzwecke, bei denen die Produkte zumindest zeitweise sauren Agentien ausgesetzt sind, insbesondere für Teile von oder komplette Bewässerungsanlagen mit Düngemittelausbringung, Dosierbehälter jeglicher Art, z. B. in Spülmaschinen (Entkalkungsmittel sind Säuren), Produkte zur Aufbewahrung oder Förderung von chloriertem oder fluoriertem Wasser, Teile für den Sanitärbereich.

Die erfindungsgemäßen Polyoxymethylene mit verbessertem Säureschutz enthalten
- A: mindestens ein Polyoxymethylen,
- B: 0,05 - < 3 Teile Melamincyanurat; und ggf.
- C: bis 5 Teile, insbesondere 0,1 - 2 Teile, bezogen auf 100 Teile A, mindestens ein Alkalisalz einer mehrwertigen Carbonsäure beispielsweise aus der Gruppe Oxalsäure, Maleinsäure, Fumarsäure, Citronensäure, und
- D: bis 5 Teile, insbesondere 0,1 - 2 Teile, bezogen auf 100 Teile A ein Polyalkylenglycol, z. B. ein Polyethylenglykol, insbesondere mit einem Molekulargewicht ≤ 5000 und/oder ein Polypropylenglykol und/oder ein Polybutylenglykol,
- E: bis 100 Teile, insbesondere bis 10 Teile, bezogen auf 100 Teile A eines thermoplastischen Polyurethans, vorzugsweise mit einer Shore-Härte A von 70 bis 96.

Vorteilhaft haben diese Polyoxymethylenmischungen bei einer Säurebehandlung einen Masseverlust je Flächeneinheit von max. 75 % vorteilhaft max. 50 % insbesondere max. 33 % und besonders bevorzugt max. 15 %, bezogen auf die Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist.

Melamincyanurat ist schon in Einsatzmengen ≥ 3 Teile je 100 Teile POM als Flammschutzmittel oder zur Beeinflußung des Gleittreibverhaltens bekannt (T. Hirae, H. Iwai, M. Sato, M. Watanabe, Y. Tsuya, ASLE Trans., 25 (4), 489 - 501 (1982); JP-A 79-85 242).

Auch für andere Polymere wie Polyamide oder Polyurethane kennt man die günstige flammhemmende Wirkung von Melamincyanurat in Einsatzmengen ≥ 3 Teile je 100 Teile Polymer (DE 41 27 112 C1).

Desweiteren ist Melamin selbst in POM seit langem als Wärmestabilisator bekannt (Gächter/Müller, Kunststoffadditive, Verlag Hauser, 1979, S. 62). Auch andere Triazinderivate (EP 0 270 729, US 4,578,422) und Melamin-Formaldehyd-Kondensate (DE 25 40 207, EP 0 363 752) werden als Wärmestabilisatoren für POM beschrieben. Melamin wie auch andere Derivate hiervon zeigen jedoch keine geeignete Säurestabilisierung.

Erfindungsgemäß wurde festgestellt, daß MCA außer stabilisierenden Wirkungen gegen Säuren noch weitere vorteilhafte Eigenschaften hat. So wirkt Melamincyanurat in POM als Wärmestabilisator und Nucleierungsmittel ähnlich wie die Melaminformaldehydkondensate. Tabelle 3 zeigt die Gewichtsverluste von Granulat unter Stickstoff und Luft, gemessen nach 2 h bei 220°C an Proben, die entweder MFK oder Melamincyanurat enthalten. Außerdem sind die isothermen Kristallisationszeiten, gemessen bei 149°C bzw. 151°C aufgeführt. Im Unterschied zu MFK führt Melamincyanurat dabei zu einer feineren Sphärolithstruktur, wie in Tabelle 4 aufgeführt, wobei die Kristallisationszeiten gegenüber MFK kaum verändert sind. Aufgrund der feineren Sphärolithstruktur lassen sich mit MCA-haltigem POM filigranere Teile herstellen, wobei die Herstellung dieser Teile meist durch Spritzguß erfolgt.

Die Erfindung betrifft daher auch Spritzgußformteile, die auf 100 Teile POM 0,05 bis <3 Teile MCA und ggf. weitere Zusätze enthalten. Besonders bevorzugt sind Spritzgußteile bis 5 g, vorteilhaft bis 3 g und insbesondere bis 1 g Eigengewicht, da an diese Teile meist hohe Anforderungen hinsichtlich der Präzision gestellt werden.

Einen besonders hohen Säureschutz erreicht man mit Polyoxymethylenen der o. g. Art, die neben der Komponente B, bezogen auf 100 Teile der Komponente A bis zu 100 Teile, vorteilhaft bis zu 50 Teile, insbesondere bis zu 25 Teile und besonders bevorzugt bis zu 10 Teile, eines thermoplastischen Polyurethans enthalten.

Üblicherweise enthalten die erfindungsgemäßen Polyoxymethylene auch Zusätze wie z. B. Antioxidanzien, Ruß, Farbstoffe, UV-Absorber, Wärmestabilisatoren, Brandschutzmittel, etc. Diese Zusätze können in die Mischungen oder auch in einzelne Komponenten davon eingearbeitet sein. Insbesondere für Außenanwendungen sind UV-Stabilisatoren und/oder Ruß zur Verhinderung von vorzeitiger Alterung zweckmäßig.

Als Polyoxymethylene für die Komponente A sind geeignet Homopolymere oder Copolymere, z. B. hergestellt aus Formaldehyd oder Trioxan. Sie können eine lineare Struktur aufweisen, aber auch verzweigt oder vernetzt sein. Sie können einzeln oder als Gemische eingesetzt werden. Homopolymere sind z. B. Polymere des Formaldehyds oder des Trioxans, deren halbacetalische Hydroxylendgruppen chemisch, beispielsweise durch Veresterung oder Veretherung gegen Abbau, stabilisiert sind. Copolymere erhält man insbesondere durch Copolymerisation des Trioxans mit mindestens einer mit Trioxan copolymerisierbaren Verbindung. Geeignet hierfür sind beispielsweise cyclische Ether, insbesondere mit 3 - 5, vorzugsweise 3 Ringgliedern, von Trioxan verschiedene cyclische Acetale, insbesondere Formale, z. B. mit 5 - 11, vorzugsweise 5 - 8 Ringgliedern, und lineare Polyacetale, insbesondere Polyformale. Die genannten Cokomponenten werden vorzugsweise in Mengen von 0,01 - 20, insbesondere 0,1 - 10 und besonders vorteilhaft zu 1 - 5 Gew.-% eingesetzt. Als cyclische Ether eignen sich vor allem Epoxide, z. B. Ethylenoxid, Styroloxid, Propylenoxid oder Epichlorhydrin sowie Glycidylether von ein- oder mehrwertigen Alkoholen oder Phenolen. Als cyclische Acetale eignen sich vor allem cyclische Formale von aliphatischen oder cycloaliphatischen α,ω-Diolen mit 2 - 8, vorzugsweise 2 - 4 Kohlenstoffatomen, deren Kohlenstoffkette in Abständen von 2 Kohlenstoffatomen durch ein Sauerstoffatom unterbrochen sein kann, z. B. 1,2- oder 1,3-Dioxolan, 1,3-Dioxan, 1,3-Dioxepan.

Geeignet sind aber auch insbesondere für die Herstellung von Terpolymeren des Trioxans Diformale, z. B. Diglycerindiformal.

Als lineare Polyacetale eignen sich sowohl Homo- oder Copolymere der vorstehend definierten cyclischen Acetale als auch lineare Kondensate aus aliphatischen oder cycloaliphatischen α,ω-Diolen mit aliphatischen Aldehyden oder Thioaldehyden, vorzugsweise Formaldehyd. Insbesondere werden Homopolymere cyclischer Formale von aliphatischen α,ω-Diolen mit 2 - 8 Kohlenstoffatomen verwendet, z. B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Dimethylformamid, das 2 Gew.-% Diphenylamin enthält, bei 135°C in einer Konzentration von 0,5 g/100 ml) sollen im allgemeinen mindestens 30 (ml/g) betragen. Die Kristallitschmelzpunkte der Polyoxymethylene liegen vorzugsweise im Bereich von 140 - 180°C, insbesondere 150 - 170°C; die Dichten liegen üblicherweise zwischen 1,38 - 1,45 g/cm³ (gemessen nach DIN 53 479).

Die erfindungsgemäß verwendeten vorzugsweise binären oder ternären Trioxan-Copolymeren werden in bekannter Weise durch Polymerisieren der Monomeren in Gegenwart kationisch wirkender Katalysatoren bei Temperaturen zwischen 0 und 150°C, vorzugsweise oberhalb 70°C, hergestellt (vgl. z. B. DE-AS 14 20 283). Die Polymerisation kann in Masse, Suspension oder Lösung erfolgen. Zur Entfernung instabiler Anteile können die Copolymeren einem thermischen oder hydrolytisch kontrollierten, partiellen Abbau bis zu primären Alkoholendgruppen unterworfen werden (vgl. z. B. DE-AS 14 45 273 und 14 45 294).

Weitere Darstellungsmethoden sind in z. B. DE-AS 10 37 705 und 11 37 215 beschrieben.

Weiterhin können die erfindungsgemäßen Formmassen noch üblicherweise bis zu 3 Gew.-%, bezogen auf das Gewicht des Polyoxymethylens, an weiteren in Polyoxymethylen-Formmassen üblichen Zusätzen enthalten. Dies können sein:
- Antioxidantien, insbesondere phenolische Verbindungen, z. B. solche mit 2 - 6 Hydroxyphenylresten im Molekül, wie z. B. in der DE-PS 25 40 207 beschrieben.
- UV-Absorber und Lichtschutzmittel, wie z. B. 2-(2'-Hydroxyphenyl)-benzotriazole, 2,4-Bis-2'-hydroxyphenyl)-6-alkyl-s-triazine und 4-Hydroxybenzophenone.
- Wärmestabilisatoren, wie z. B. Carbonsäureamide, insbesondere Oxalsäure, Malonsäure-, Isophthalsäure-, Terephtahalsäurediamid und Trimesinsäuretriamid; Polyamide, Salze langkettiger Carbonsäuren, wie z. B. Ca-Stearat, Melamin, s-Triazinderivate oder Kondensationsprodukte aus Melamin und Formaldehyd.

Bei den verwendeten thermoplastischen Polyurethanen handelt es sich um an sich bekannte Produkte, wie sie beispielsweise in der DE-PS 11 93 240 oder der DE-OS 20 51 028 beschrieben sind. Sie werden in an sich bekannter Weise durch Polyaddition aus Polyisocyanaten, insbesondere Diisocyanate, Polyestern und/oder Polyethern bzw. Polyesteramiden oder anderen geeigneten Hydroxy- bzw. Aminoverbindungen, wie hydroxyliertem Polybutadien, und ggf. Kettenverlängerern wie niedermolekularen Polyolen, insbesondere Diolen, Polyaminen, insbesondere Diaminen, oder Wasser hergestellt.

Grundsätzlich sind alle Polyurethantypen sowie deren Kombinationen, wie z. B. Polyesterurethane, Polyetheresterurethane, Polyetherurethane, aliphatische TPU und/oder Polyethercarbonaturethane geeignet. Vorzugsweise werden jedoch Polyesterurethane eingesetzt. Hierbei werden solche mit Shore Härte A von 80 - 96 bevorzugt, besonders bevorzugt sind solche mit Shore Härte A von 84 - 92. Die eingesetzte Polyurethankonzentration beträgt 0,1 - 3 Gew.-Teile bezogen auf 100 Teile Polyoxymethylen.

Als Komponente D sind geeignet Polyalkylenglykole, bevorzugt werden Polyethylenglykole und Polypropylenglykole eingesetzt, besonders bevorzugt sind Polyethylenglykole. Das Molekulargewicht der eingesetzten Polyalkylenglykole ist ≤ 5000, vorzugsweise 800 - 2000, besonders bevorzugt 900 - 1500.

Die Erfindung betrifft auch ein Verfahren zur Herstellung eines Polyoxymethylens mit verbessertem Säureschutz und/oder feinerer Sphärolithstruktur, bei dem
- A: 100 Teile eines Polyoxymethylens mit
- B: 0,05 - <3 Teile Melamincyanurat und ggf.
- C: bis 5 Teile eines Salzes einer mehrwertigen Carbonsäure,
- D: bis 5 Teile eines Polyalkylenglykols,
- E: bis 100 Teile eines thermoplastischen TPU
und
- F: übliche Zusätze
vermischt und ggf. zu Formteilen gepreßt oder spritzgegossen werden.

Die Säurebeständigkeit der so hergestellten Produkte kann wie oben beschrieben bestimmt werden.

Vorzugsweise werden die erfindungsgemäßen Polyoxymethylenzusammensetzungen zu Formkörpern weiterverarbeitet.

Die Erfindung betrifft auch die Verwendung von
0,05 - 15 Teilen Melamincyanurat (B) und ggf.
bis 5 Teilen eines Salzes einer mehrwertigen Carbonsäure (C)
bis 5 Teilen eines Polyalkylenglykols (D), wie z. B. eines Polyethylenglykols,
Polypropylenglykols und/oder Polybutylenglykols, bis 100 Teilen eines thermoplastischen Polyurethans (E)
   und
übliche Zusätze (F)
auf 100 Teile eines Polyoxymethylens (A) zur Verbesserung der Säurebeständigkeit oder in einem Formkörper mit verbesserter Säurebeständigkeit oder in einem Formkörper mit feiner Shärolithstruktur. Auch hier können die oben beschriebenen Verfahren zur Bestimmung des Säureschutzes zur Anwendung kommen.

Auch beim Verfahren und der Verwendung gelten die oben genannten besonderen Bereiche für die zugegebenen Komponenten. Für die TPU sind diejenigen mit Shore-Härte A sowie die oben genannten kleineren Einsatzmengen wiederum bevorzugt.

Die Erfindung wird in den nachfolgenden Beispielen näher beschrieben.

### Beschreibung der Einsatzstoffe

- POM:: Copolymeres aus Trioxan und 1.3-Dioxepan mit ca. 2,55 % Comonomeranteil, bereits stabilisiert mit 0,4 % Triethylenglykol-bis-(3-tert.butyl-5-methyl-4-hydroxyphenyl)-propionat als Antioxidans.
MFI: 8 bis 10 g/10 min (190°C/2,16 kp)
- MCA:: Melamincyanurat technische Qualität
- MFK:: Feinteiliges, vernetztes Melamin-Formaldehyd-Kondensat, wie z. B. in DE 25 40 207 beschrieben.

### Beispiele

### Vergleichsbeispiel a und Beispiele 1 - 4

Die Komponenten POM, MFK und MCA wurden in den in Tabelle 1 angegeben Gewichtsverhältnissen, jeweils bezogen auf POM, vermischt. Die Mischung wurde in einem Zweiwellenextruder vom Typ ZDS-K 28 aufgeschmolzen, homogenisiert und die homogenisierte Mischung granuliert. Aus dem Granulat wurden bei 190°C Platten der Dimension 15,8 x 15,8 x 0,2 cm gepreßt. Daraus wurden Probekörper der Dimension 7,8 x 1,0 x 0,2 cm ausgesägt, entgratet, exakt nachvermessen, gewogen und dem Test unterzogen. Am 5., 6., 12., 13., 19. und 20. Tag wurde nicht getaucht.

**Tabelle 1:**

| Vergleichsversuch/Beispiel | MCA [%] | MFK [%] | Korrosionsrate Test 1 (8 d) [%] rel. zu a |
|---|---|---|---|
| a | - | 0,15 | 100,0 |
| 1 | 0,15 | 0,15 | 71,0 |
| 2 | 0,2 | 0,15 | 62,0 |
| 3 | 0,3 | 0,15 | 49,0 |
| 4 | 0,5 | 0,15 | 37,0 |

Die Vergleichsprobe a hatte am 4., 5., 8. Tag einen Gewichtsverlust (mg/cm² Oberfläche) von 4,5, 7,2 bzw. 17,7.

### Vergleichsbeispiel b und Beispiele 5 - 9

Es wurde wie in Beispielen 1 - 4 verfahren.

**Tabelle 2:**

| Verleichsversuch / | MCA [%] | MFK [%] | Korrosionsrate Test1 (11d) [%] rel. zu b |
|---|---|---|---|
| b | - | 0,15 | 100,0 |
| 5 | 1 | 0,15 | 21,0 |
| 6 | 2 | 0,15 | 9,1 |
| 7 | 3 | 0,15 | 6,7 |
| 8 | 5 | 0,15 | 3,2 |
| 9 | 10 | 0,15 | 2,9 |

b / Beispiel 9 hatte am 4., 11., 18., 25. Tag einen Gewichtsverlust (mg/cm² Oberfläche) von 6,8/0,5, 37,2/1,1, n. b./1,5 n. b./1,7.

### Vergleichsbeispiel c - h und Beispiele 10 - 14

Zur Bestimmung des Gewichtsverlustes unter N₂ bzw. Luft wurden ca. 1,2 g Granulat, hergestellt wie in den Beispielen 1 - 4 beschrieben, in ein Reagenzglas (⌀ ca. 12 mm) eingewogen und in einem Aluminiumheizblock unter Überleiten von ca. 2,8 l Stickstoff bzw. Luft pro Stunde für 2 h auf 220°C erhitzt (Schmelze). Nach dem Abkühlen auf Raumtemperatur wird der Gewichtsverlust bestimmt.

Zur Bestimmung der isothermen Kristallationszeit werden ca. 5 mg Granulat in einem Differential Thermal Analyzer (Fa. Mettler TA 3000) bei 190°C für 5 Minuten aufgeschmolzen. Anschließend wird mit 40°C/Minute auf 149 bzw. 151°C abgekühlt und dann die Zeit bis zum Maximum des exothermen Signals bestimmt.

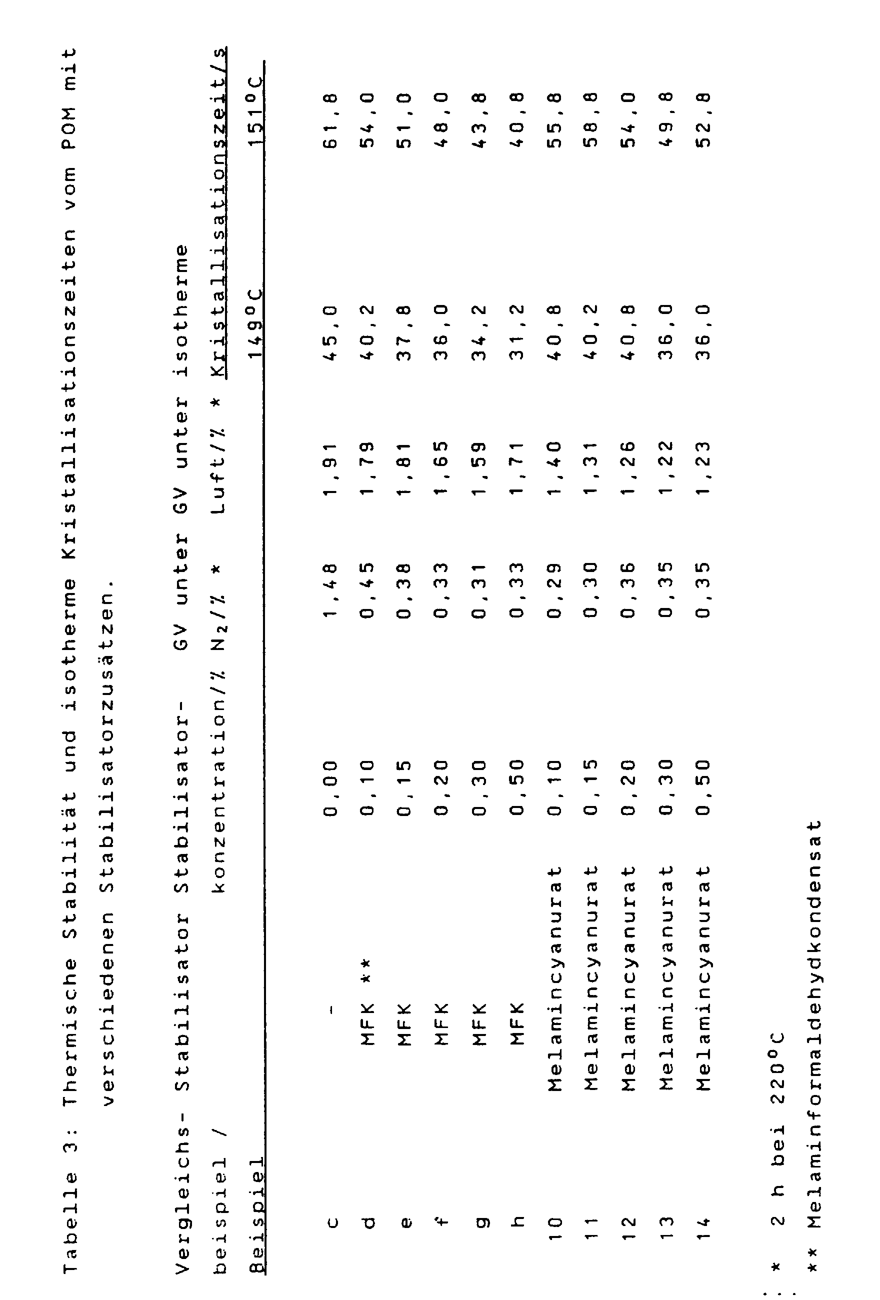

### Vergleichsbeispiel i und k sowie Beispiel 15

Aus einem wie in den Beispielen 1 - 4 beschrieben hergestellten Granulat wurden Dünnschnitte von ca. 1 µm Dicke hergestellt und die Sphärolithgröße an lichtmikroskopischen Aufnahmen mit polarisiertem Licht (Vergrößerung 160x) bestimmt.

**Tabelle 4 :**

| Sphärolithgrößen in POM in Abhängigkeit vom Nucleierungsmittel. | | | |
|---|---|---|---|
| Vergleichsbeispiel / Beispiel | Nukleierungsmittel | Stabilisatorkonzentration / % | Sphärolithgröße |
| i | - | 0,00 | 100 - 150 µm |
| k | MFK | 0,15 | 40 - 60 µm |
| 15 | Melamincyanurat | 0,15 | ca. 30 µm |

### Vergleichsbeispiel 1 und m sowie Beispiele 16 und 17

Aus einem wie in den Beispielen 1 - 4 beschrieben hergestellten Granulat wurden bei einer Massetemperatur von 190° - 200°C und einer Werkzeugoberflächentemperatur von 80° - 100°C Spritzgußteile (Normkleinstäbe 5 cm x 0,6 cm x 0,4 cm) hergestellt (Arburg Allrounder 320-210-850).

Aus diesen Normkleinstäben wurden Dünnschnitte von ca. 1 µm Dicke hergestellt und die Sphärolithgröße an lichtmikroskopischen Aufnahmen mit polarisiertem Licht (Vergrößerung 160x bzw. 250x) bestimmt.

**Tabelle 5:**

| Sphärolithgrößen in POM in Abhängigkeit vom Nucleierungsmittel. | | | |
|---|---|---|---|
| Vergleichsbeispiel / Beispiel | Nukleierungsmittel | Stabilisatorkonzentration / % | Sphärolithgröße |
| l | MFK | 0,15 | 35 µm |
| m | MFK | 0,5 | 20 µm |
| 16 | MCA | 0,15 | 23 µm |
| 17 | MCA | 0,5 | 15 µm |

## Patentansprüche

1. Polyoxymethylen mit verbessertem Säureschutz, enthaltend
A mindestens ein Polyoxymethylen,
B 0,05 - < 3 Teile, bezogen auf 100 Teile A, Melamincyanurat, sowie
C bis 5 Teile, bezogen auf 100 Teile A, eines Alkalisalzes einer mehrwertigen Carbonsäure,
D bis 5 Teile, bezogen auf 100 Teile A, eines Polyalkylenglykols,
E bis 100 Teile, bezogen auf 100 Teile A, eines thermoplastischen Polyurethans,
F übliche Zusätze.

2. Polyoxymethylen nach Anspruch 1,
**dadurch gekennzeichnet,**
daß sein Masseverlust je Flächeneinheit bei einer Säurenbehandlung max. 75 % beträgt bezogen auf die Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist, und
wobei der Masseverlust in % (mg/cm² getauchte Oberfläche) bezüglich des durchschnittlichen Masseverlustes eines Standardpolyoxymethylens ohne Zusatz bestimmt ist.

3. Polyoxymethylen Anspruch 1 oder 2,
**dadurch gekennzeichnet**,
daß es übliche Zusätze, wie z. B. Antioxidantien, Ruß oder andere Farbstoffe, UV-Absorber, Wärmestabilisatoren, Brandschutzmittel, enthält.

4. Formkörper aus einem Polyoxymethylen gemäß einem der vorhergehenden Ansprüche.

5. Spritzgußformteil aus einem Polyoxymethylen gemäß einem der vorhergehenden Ansprüche.

6. Verfahren zur Herstellung eines Polyoxymethylens mit verbessertem Säureschutz und/oder verbesserten Spritzgußeigenschaften,
**dadurch gekennzeichnet,**
daß
A 100 Teile eines Polyoxymethylens mit
B 0,05 - <3 Teile Melamincyanurat sowie
C bis 5 Teile eines Salzes einer mehrwertigen Carbonsäure
D bis 5 Teile eines Polyalkylenglykols,
E bis 100 Teile eines thermoplastischen Polyurethans und
F übliche Zusätze
vermischt und ggf. zu Formteilen gepreßt oder spritzgegossen werden.

7. Verfahren nach Anspruch 6,
**dadurch gekennzeichnet,**
daß die Komponenten B bis D und ggf. E und/oder F in einer solchen Menge zu A zugegeben werden, daß der Masseverlust je Flächeneinheit eines Prüfkörpers bei einer Säurebehandlung max. 75 % beträgt bezogen auf einen Prüfkörper aus Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist, und
wobei der Masseverlust in % (mg/cm² getauchte Oberfläche) bezüglich des durchschnittlichen Masseverlustes eines Standardpolyoxymethylens ohne Zusatz bestimmt wird.

8. Verwendung von
0,05 - 15 Teilen Melamincyanurat (B) und
bis 5 Teilen eines Salzes einer mehrwertigen Carbonsäure (C),
bis 5 Teilen eines Polyalkylenglykols (D),
bis 100 Teilen eines thermoplastischen Polyurethans (E)
und
ggf. übliche Zusätze
auf 100 Teile eines Polyoxymethylens (A) zur Verbesserung der Säurebeständigkeit oder in einem Formkörper mit verbesserter Säurebeständigkeit oder in einem Formkörper mit feiner Sphärolithstruktur.

9. Verwendung nach Anspruch 8,
**dadurch gekennzeichnet**,
daß die Komponenten 8 bis D und ggf. E in einer solchen Menge verwendet werden, daß der Masseverlust je Flächeneinheit eines Prüfkörpers bei einer Säurebehandlung max. 75 % beträgt bezogen auf einen Prüfkörper aus Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist, und
wobei der Masseverlust in % (mg/cm² getauchte Oberfläche) bezüglich des durchschnittlichen Masseverlustes eines Standardpolyoxymethylens ohne Zusatz bestimmt wird.

## Claims

1. Polyoxymethylene with improved acid stability containing
A at least one polyoxymethylene,
B 0.05 - < 3 parts, relative to 100 parts of A, of melamine cyanurate together with
C up to 5 parts, relative to 100 parts of A, of an alkali salt of a polybasic carboxylic acid and
D up to 5 parts, relative to 100 parts of A, of a polyalkene glycol,
E up to 100 parts, relative to 100 parts of A, of a thermoplastic polyurethane,
F conventional additives.

2. Polyoxymethylene according to claim 1,
**characterised in that**
its loss of mass per unit area on acid treatment is a maximum of 75%, relative to component A, wherein acid treatment comprises the following stages:
brief immersion of a test piece in 2 wt.% phosphoric acid,
storage of test piece for some 24 hours at 20 - 30% relative atmospheric humidity,
optional repetition of these stages until an equivalently treated test piece prepared from component A has undergone a loss of at least 5 mg/cm² and
wherein the percentage loss of mass (mg/cm² of immersed surface) is determined in relation to the average loss of mass of a standard polyoxymethylene without additives.

3. Polyoxymethylene according to claim 1 or 2,
**characterised in that**
it contains conventional additives, such as for example antioxidants, carbon black or other colorants, UV absorbers, heat stabilisers, flame retardants.

4. Moulded article made from a polyoxymethylene according to one of the preceding claims.

5. Injection moulded article made from a polyoxymethylene according to one of the preceding claims.

6. Process for the production of a polyoxymethylene with improved acid resistance and/or improved injection moulding properties,
**characterised in that**
A 100 parts of polyoxymethylene are blended with
B 0.05 - < 3 parts of melamine cyanurate and
C up to 5 parts of a salt of a polybasic carboxylic acid,
D up to 5 parts of a polyalkene glycol,
E up to 100 parts of a thermoplastic polyurethane and
F conventional additives
and are optionally processed into moulded articles by compression or injection moulding.

7. Process according to claim 6,
**characterised in that**
components B to D and optionally E and/or F are added to A in such a quantity that the loss of mass per unit area of a test piece on acid treatment is a maximum of 75% relative to a test piece made from component A, wherein acid treatment comprises the following stages:
brief immersion of a test piece in 2 wt.% phosphoric acid,
storage of test piece for some 24 hours at 20 - 30% relative atmospheric humidity,
optional repetition of these stages until an equivalently treated test piece prepared from component A has undergone a loss of at least 5 mg/cm², and
wherein the percentage loss of mass (mg/cm² of immersed surface) is determined in relation to the average loss of mass of a standard polyoxymethylene without additives.

8. Use of
0.05 - 15 parts of melamine cyanurate (B) and
up to 5 parts of a salt of a polybasic carboxylic acid (C),
up to 5 parts of a polyalkene glycol (D),
up to 100 parts of a thermoplastic polyurethane (E) and
optionally conventional additives
per 100 parts of a polyoxymethylene (A) in order to improve acid resistance or in a moulded article with improved acid resistance or in a moulded article with a fine spherulite structure.

9. Use according to claim 8,
**characterised in that**
components B to D and optionally E are used in such a quantity that the loss of mass per unit area of a test piece on acid treatment is a maximum of 75% relative to a test piece made from component A, wherein acid treatment comprises the following stages:
brief immersion of a test piece in 2 wt.% phosphoric acid,
storage of test piece for some 24 hours at 20 - 30% relative atmospheric humidity,
optional repetition of these stages until an equivalently treated test piece prepared from component A has undergone a loss of at least 5 mg/cm² and
wherein the percentage loss of mass (mg/cm² of immersed surface) is determined in relation to the average loss of mass of a standard polyoxymethylene without additives.

## Revendications

1. Polyoxyméthylène ayant une protection contre les acides améliorée, qui contient :
A- au moins un polyoxyméthylène,
B- de 0,05 à < 3 parties, par rapport à 100 parties de A, de cyanurate de mélamine ainsi que
C- jusqu'à 5 parties, rapportées à 100 parties de A, d'un sel de métal alcalin d'un acide carboxylique plurivalent,
D- jusqu'à 5 parties, rapportées à 100 parties de A, d'un polyalcoylèneglycol,
E- jusqu'à 100 parties, rapportées à 100 parties de A, d'un polyuréthanne thermoplastique,
F- des additifs usuels.

2. Polyoxyméthylène selon la revendication 1,
caractérisé en ce que
sa perte de masse par unité de surface lors d'un traitement par acide, s'élève au maximum à 75 %, %, rapportée au composant A,
procédé dans lequel le traitement par acide comprend les étapes suivantes :
- immersion brève d'une éprouvette dans de l'acide phosphorique à 2 % en poids,
- stockage de l'éprouvette environ 24 heures à une humidité atmosphérique relative de 20 à 30 %,
- le cas échéant répétition des étapes jusqu'à ce qu'une éprouvette traitée d'une manière correspondante à base de composant A, manifeste une perte d'au moins 5 mg/cm² et,
dans lequel la perte de masse en % (mg/cm² de surface immergée) par rapport à la perte moyenne de masse d'un polyoxyméthylène standard sans additif, est déterminée.

3. Polyoxyméthylène selon la revendication 1 ou 2,
caractérisé en ce qu' il renferme des additifs usuels, comme par exemple des antioxydants, du noir de fumée, ou d'autres colorants, des absorbants des UV, des stabilisants à la chaleur, des agents ignifuges.

4. Corps de moulage à partir d'un polyoxyméthylène conformément à l'une des revendications précédentes.

5. Pièce de moulage par injection en un polyoxyméthylène conformément à l'une des revendications précédentes.

6. Procédé d'obtention d'un polyoxyméthylène ayant une protection améliorée contre les acides et/ou des propriétés de moulage par injection améliorées,
caractérisé en ce que
l'on mélange :
A - 100 parties d'un polyoxyméthylène avec,
B - 0,05 à < 3 parties de cyanurate de mélamine ainsi que,
C - jusqu'à 5 parties d'un sel d'un acide carboxylique plurivalent,
D - jusqu'à 5 parties d'un polyalcoylène glycol,
E - jusqu'à 100 parties d'un polyuréthanne thermoplastique
et,
F - des additifs usuels
et le cas échéant, on presse en pièces moulées ou on moule par injection.

7. Procédé selon la revendication 6,
caractérisé en ce que
les composants B à D et éventuellement E et/ou F sont ajoutés en une quantité telle à A, que la perte de masse par unité de surface d'une éprouvette lors d'un traitement par acide, s'élève au maximum à 75 %, rapportée à une éprouvette en composant A, dans laquelle le traitement par acide comprend les étapes suivantes :
- immersion brève d'une éprouvette dans de l'acide phosphorique à 2 %,
- stockage de l'éprouvette pendant environ 24 heures à une humidité atmosphérique relative de 20 à 30 %,
- le cas échéant, répétition des étapes jusqu'à ce qu'une éprouvette traitée d'une manière correspondante, à base de composant A, manifeste une perte d'au moins 5 mg/cm² et,
dans laquelle la perte de masse en % (mg/cm² de surface immergée) par rapport à la perte moyenne de masse d'un polyoxyméthylène standard sans additif, est déterminée.

8. Utilisation de :
0,05-15 parties de cyanurate de mélamine (B) et de jusqu'à 5 parties d'un sel d'un acide carboxylique plurivalent (C),
jusqu'à 5 parties d'un polyalcoylèneglycol (D) jusqu'à 100 parties d'un polyuréthanne thermoplastique (E) et,
éventuellement des additifs usuels pour 100 parties d'un polyoxyméthylène (A) en vue de l'amélioration de la stabilité aux acides ou dans un corps moulé ayant une stabilité améliorée aux acides ou dans un corps moulé ayant une structure fine de sphérolithe.

9. Utilisation selon la revendication 8,
caractérisé en ce que
les composants B à D et éventuellement E sont utilisés en une quantité telle, que la perte de masse par unité de surface d'une éprouvette, lors d'un traitement par acide, s'élève au maximum à 75 % rapporté à une éprouvette en composant A,
dans laquelle le traitement par acide comprend les étapes suivantes :
- brève immersion d'une éprouvette dans de l'acide phosphorique à 2 %,
- stockage de l'éprouvette pendant environ 24 heures à une humidité atmosphérique relative de 20 à 30 %,
- éventuellement répétition des étapes jusqu'à ce qu'une éprouvette traitée d'une manière correspondante, en composant A présente une perte d'au moins 5 mg/cm² et,
dans laquelle la perte de masse en % (mg/cm² de surface immergée) par rapport à la perte de masse moyenne d'un polyoxyméthylène standard sans additif, est déterminée.
